# EUROPEAN PATENT SPECIFICATION

(11) **EP 2 149 032 B1**
(45) Date of publication and mention of the grant of the patent: **03.12.2014**
(21) Application number: 08738104.2
(22) Date of filing: 09.05.2008
(51) Int. Cl.: G01C 21/34

(54) **METHOD, APPARATUS AND COMPUTER PROGRAM PRODUCT FOR A SOCIAL ROUTE PLANNER**
VERFAHREN, VORRICHTUNG UND COMPUTERPROGRAMMPRODUKT FÜR EINEN SOZIALEN ROUTENPLANER
PROCÉDÉ, APPAREIL ET PRODUIT DE PROGRAMME D'ORDINATEUR POUR UN PLANIFICATEUR DE TRAJET SOCIAL

(30) Priority: 23.05.2007 US 752457
(43) Date of publication of application: 03.02.2010
(73) Proprietor: Nokia Corporation, 02610 Espoo (FI)
(72) Inventor: BLOM, Jan, CH - 1095 Lutry (CH); BELZER, Rosalinde, FI-00140 Helsinki (FI); CHICHASE, Jan, Los Angeles, CA 90025 (US); MARCH, Wendy, Portland, Oregon 97221 (US); BOAITEY, Nana Yaw O, Apopka, Florida 32712 (US)
(74) Representative: Higgin, Paul
(86) International application number: PCT/IB2008/051865
(87) International publication number: WO 2008/142605

(56) References cited:
- EP-A- 1 134 554
- JP-A- 6 289 118
- US-A1- 2005 075 116

## Description

### FIELD OF THE INVENTION

The present invention relates to an apparatus, method and a computer program product for route planning.

### BACKGROUND OF THE INVENTION

The modem communications era has brought about a tremendous a expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Current and future networking technologies continue to facilitate ease of information transfer and convenience to users. Such increased ease of information transfer and convenience to users has recently been accompanied by an increased ability to provide mobile communications at a relatively low cost. Accordingly, mobile communication devices are becoming ubiquitous in the modem world. With the rapid expansion of mobile communications technology, there has been a related rapid expansion in those services that are demanded and provided via mobile communication devices.

One area in which services have recently expanded relates to provision of various applications or software to users of electronic devices such as a mobile terminal. The applications or software may be executed from a local computer, a network server or other network device, or from the mobile terminal such as, for example, a mobile telephone, a mobile television, a mobile gaming system, etc, or even from a combination of the mobile terminal and the network device. In this regard, various applications and software have been developed and continue to be developed in order to give the users robust capabilities to perform tasks, communicate, entertain themselves, etc. in either fixed or mobile environments.

One task which may be performed may relate to navigation services such as services that provide route determination. Such navigation services have been further developed in the form of applications that run on cellular phones, which may track and report the movement of a cellular phone although such applications are also commonly used in vehicles or other mobile platforms. Such applications have been implemented with various location sensing devices and for numerous functions. For example, users may utilize mapping applications to determine an optimal or in some way desirable route from one location to another. The optimization is typically performed on the basis of factors such as time, distance, fuel consumption or other strictly operational considerations.

However, for many users, it may be desirable to incorporate factors other than operational considerations into route determination decisions.

US2005/075116 relates to tracking locations and movement of wireless mobile handsets and, more particularly, to systems that monitor progress by a user toward a destination by tracking the user's handset. In particular, US2005/075116 discloses methods and apparatus for providing a wireless virtual campus escort to a user while the user proceeds from a starting point to a destination on the campus. The user interacts with the campus security management server to request an escort and to select a route to the destination. The campus security management server proposes one or more routes based, for example, on the user's current location, the desired destination, information stored in the GIS database (such as locations of exiting walkways, roadways and lighting fixtures), current time of day, season, weather and expected arrival time. Then, after the user selects a route, or restrictions are placed on the user, the campus security management server uploads rules to the handset, and a software application executing in the handset thereafter monitors the location and movement of the handset and compares this information to the rules. Social dangers, such as locations or areas that have been used or frequented by attackers or have been the subject of other crimes, such as burglaries or drug use, are treated separately using a crime map overlay of the campus service area, which is generated and maintained on the campus security management server. The crime map overlay is then used by the campus security management server to evaluate the relative safety of computed or recommended travel routes.

JP6289118 relates to a satellite navigation terminal device which displays the user's coordinate position and the coordinate position of other satellite navigation terminal devices. The user's coordinates are transmitted to other satellite navigation terminal devices.

EP1134554 relates to a map display device and navigation device. The device can receive information from an external system such that information can be displayed on a map display. The information may relate to, for example, traffic jam data. EP1134554 further discloses that the navigation devices can be so structured as to display other users' information and that the present navigation device exchanges via the communications part position information with any other specific user's navigation device. Further, by setting that the user of the present navigation device can receive position information of his/her friend's navigation device, the friend's position can be displayed on the map image.

### BRIEF SUMMARY OF THE INVENTION

The present invention is as set out in the independent claims.

A method, apparatus and computer program product are therefore provided that may enable the incorporation of non-operational considerations such as social factors into route determination. For example, information related to social contacts associated with a particular route may be provided to correspond to each potential route from one location to another location. Accordingly, in an example of the present disclosure, route determination decisions may be made based on social factors such as selecting a route with tho most or least social activity.

In one example of the present disclosure, a method of providing a social route planner is provided. The method may include receiving social information associated with a particular area, associating the social information with a candidate route through the particular area, and generating a display based on the social information.

In another example of the present disclosure, a computer program product for providing a social route planner is provided. The computer program product may include at least one computer-readable storage medium having computer-readable program code portions stored therein. The computer-readable program code portions may include a first executable portion, a second executable portion and a third executable portion. The first executable portion may be for receiving social information associated with a particular area. The second executable portion may be for associating the social information with a candidate route through the particular area. The third executable portion may be for generating a display based on the social information.

In another example of the present disclosure, an apparatus for providing a social route planner is provided. The apparatus may include a processing element. The processing element may be configured to a processing element configured to receive social information associated with a particular area, associate the social information with a candidate route through the particular area, and generate a display based on the social information.

In another example of the present disclosure, an apparatus for providing a social route planner is provided. The apparatus includes means for receiving social information associated with a particular area, means for associating the social information with a candidate route through the particular area, and means for generating a display based on the social information.

In yet another example of the present disclosure, an apparatus for a social route planner is provided which may include a processing element. The processing element may be configured to generate social information classifications with respect to other devices, request routing information from a server, receive routing information including at least one candidate route associated with social information provided at least in part based on the social information classifications, and generate a display based on the candidate route and the social information.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a schematic block diagram of a mobile terminal according to an exemplary embodiment of the present invention;
FIG. 2 is a schematic block diagram of a wireless communications system according to an exemplary embodiment of the present invention;
FIG. 3 illustrates a block diagram showing a system for providing a social route planner according to an exemplary embodiment of the present invention;
FIG. 4 illustrates an example of two candidate routes including corresponding social information according to an exemplary embodiment of the present invention; and
FIG. 5 is a flowchart according to an exemplary method of providing a social route planner according to an exemplary embodiment of the present invention.

### DETAILED DESCRIPTION OF THE INVENTION

Embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

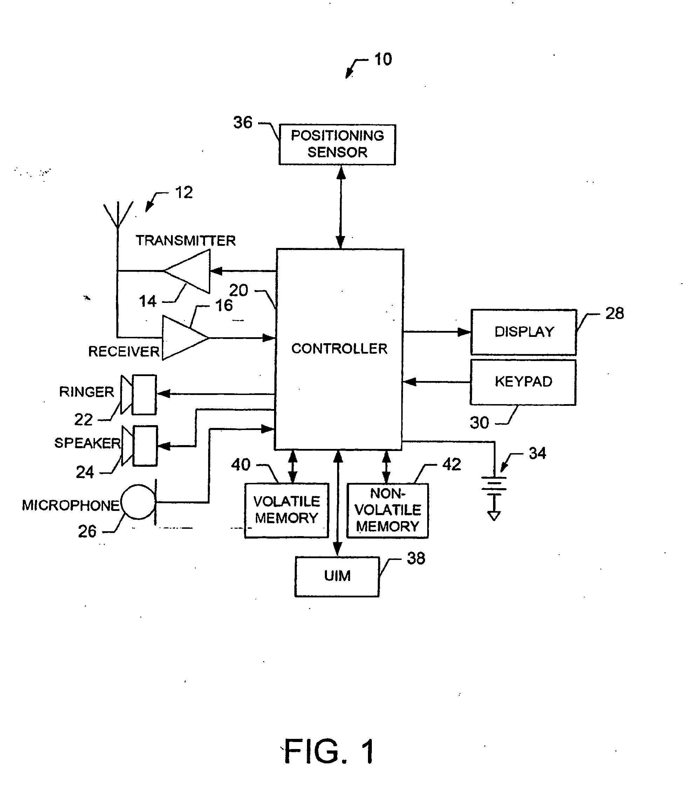

FIG. 1 illustrates a block diagram of a mobile terminal 10 that would benefit from embodiments of the present invention. It should be understood, however, that a mobile telephone as illustrated and hereinafter described is merely illustrative of one type of mobile terminal that would benefit from embodiments of the present invention and, therefore, should not be taken to limit the scope of embodiments of the present invention. While one embodiment of the mobile terminal 10 is illustrated and will be hereinafter described for purposes of example, other types of mobile terminals, such as portable digital assistants (PDAs), pagers, mobile computers, mobile televisions, gaming devices, laptop computers, cameras, video recorders, GPS devices and other types of voice and text communications systems, can readily employ embodiments of the present invention. Furthermore, devices that are not mobile may also readily employ embodiments of the present invention.

The system and method of embodiments of the present invention will be primarily described below in conjunction with mobile communications applications. However, it should be understood that the system and method of embodiments of the present invention can be utilized in conjunction with a variety of other applications, both in the mobile communications industries and outside of the mobile communications industries.

The mobile terminal 10 includes an antenna 12 (or multiple antennae) in operable communication with a transmitter 14 and a receiver 16. The mobile terminal 10 further includes a controller 20 or other processing element that provides signals to and receives signals from the transmitter 14 and receiver 16, respectively. The signals include signaling information in accordance with the air interface standard of the applicable cellular system, and also user speech, received data and/or user generated data. In this regard, the mobile terminal 10 is capable of operating with one or more air interface standards, communication protocols, modulation types, and access types. By way of illustration, the mobile terminal 10 is capable of operating in accordance with any of a number of first, second, third and/or fourth-generation communication protocols or the like. For example, the mobile terminal 10 may be capable of operating in accordance with second-generation (2G) wireless communication protocols IS-136 (TDMA), GSM, and IS-95 (CDMA), or with third-generation (3G) wireless communication protocols, such as UMTS, CDMA2000, WCDMA and TD-SCDMA, with fourth-generation (4G) wireless communication protocols or the like.

It is understood that the controller 20 includes circuitry desirable for implementing audio and logic functions of the mobile terminal 10. For example, -the controller 20 may be comprised of a digital signal processor device, a microprocessor device, and various analog to digital converters, digital to analog converters, and other support circuits. Control and signal processing functions of the mobile terminal 10 are allocated between these devices according to their respective capabilities. The controller 20 thus may also include the functionality to convolutionally encode and interleave message and data prior to modulation and transmission. The controller 20 can additionally include an internal voice coder, and may include an internal data modem. Further, the controller 20 may include functionality to operate one or more software programs, which may be stored in memory. For example, the controller 20 may be capable of operating a connectivity program, such as a conventional Web browser. The connectivity program may then allow the mobile terminal 10 to transmit and receive Web content, such as location-based content and/or other web page content, according to a Wireless Application Protocol (WAP), Hypertext Transfer Protocol (HTTP) and/or the like, for example.

The mobile terminal 10 may also comprise a user interface including an output device such as a conventional earphone or speaker 24, a ringer 22, a microphone 26, a display 28, and a user input interface, all of which are coupled to the controller 20. The user input interface, which allows the mobile terminal 10 to receive data, may include any of a number of devices allowing the mobile terminal 10 to receive data, such as a keypad 30, a touch display (not shown) or other input device. In embodiments including the keypad 30, the keypad 30 may include the conventional numeric (0-9) and related keys (#, *), and other keys used for operating the mobile terminal 10. Alternatively, the keypad 30 may include a conventional QWERTY keypad arrangement. The keypad 30 may also include various soft keys with associated functions. In addition, or alternatively, the mobile terminal 10 may include an interface device such as a joystick or other user input interface. The mobile terminal 10 further includes a battery 34, such as a vibrating battery pack, for powering various circuits that are required to operate the mobile terminal 10, as well as optionally providing mechanical vibration as a detectable output. In addition, the mobile terminal 10 may include a positioning sensor 36. The positioning sensor 36 may include, for example, a global positioning system (GPS) sensor, an assisted global positioning system (Assisted-GPS) sensor, etc. However, in one exemplary embodiment, the positioning sensor 36 includes a pedometer or inertial sensor. In this regard, the positioning sensor 36 is capable of determining a location of the mobile terminal 10, such as, for example, longitudinal and latitudinal directions of the mobile terminal 10, or a position relative to a reference point such as a destination or start point.

The mobile terminal 10 may further include a user identity module (UIM) 38. The UIM 38 is typically a memory device having a processor built in. The UIM 38 may include, for example, a subscriber identity module (SIM), a universal integrated circuit card (UICC), a universal subscriber identity module (USIM), a removable user identity module (R-UIM), etc. The UIM 38 typically stores information elements related to a mobile subscriber. In addition to the UIM 38, the mobile terminal 10 may be equipped with memory. For example, the mobile terminal 10 may include volatile memory 40, such as volatile Random Access Memory (RAM) including a cache area for the temporary storage of data. The mobile terminal 10 may also include other non-volatile memory 42, which can be embedded and/or may be removable. The non-volatile memory 42 can additionally or alternatively comprise an EEPROM, flash memory or the like, such as that available from the SanDisk Corporation of Sunnyvale, California, or Lexar Media Inc. of Fremont, California. The memories can store any of a number of pieces of information, and data, used by the mobile terminal 10 to implement the functions of the mobile terminal 10. For example, the memories can include an identifier, such as an international mobile equipment identification (IMEI) code, capable of uniquely identifying the mobile terminal 10. Furthermore, the memories may store instructions for determining cell id information. Specifically, the memories may store an application program for execution by the controller 20, which determines an identity of the current cell, i.e., cell id identify or cell id information, with which the mobile terminal 10 is in communication. In conjunction with the positioning sensor 36, the cell id information may be used to more accurately determine a location of the mobile terminal 10.

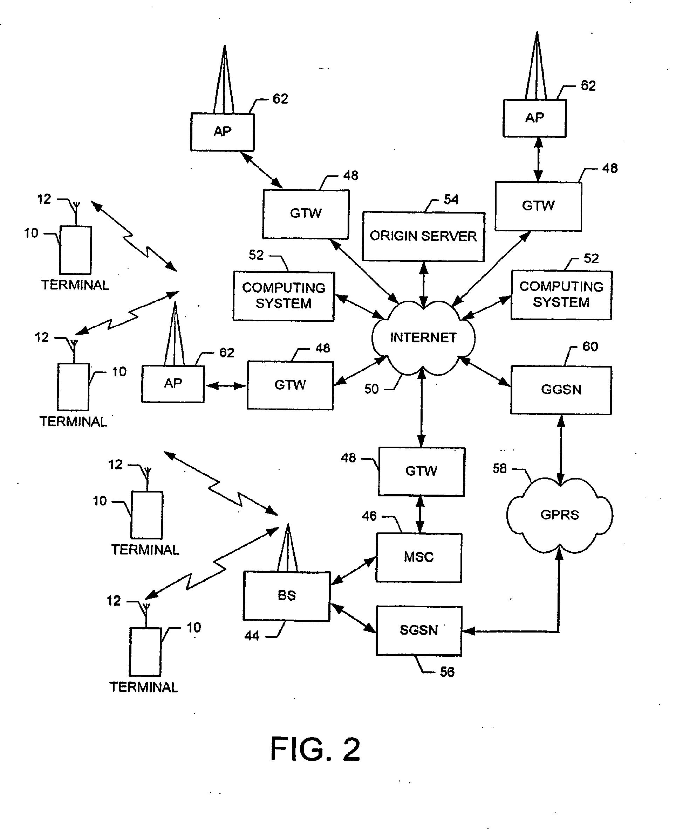

FIG. 2 is a schematic block diagram of a wireless communications system according to an exemplary embodiment of the present invention. Referring now to FIG. 2, an illustration of one type of system that would benefit from embodiments of the present invention is provided. The system includes a plurality of network devices. As shown, one or more mobile terminals 10 may each include an antenna 12 for transmitting signals to and for receiving signals from a base site or base station (BS) 44. The base station 44 may be a part of one or more cellular or mobile networks each of which includes elements required to operate the network, such as a mobile switching center (MSC) 46. As well known to those skilled in the art, the mobile network may also be referred to as a Base Station/MSC/Interworking function (BMI). In operation, the MSC 46 is capable of routing calls to and from the mobile terminal 10 when the mobile terminal 10 is making and receiving calls. The MSC 46 can also provide a connection to landline trunks when the mobile terminal 10 is involved in a call. In addition, the MSC 46 can be capable of controlling the forwarding of messages to and from the mobile terminal 10, and can also control the forwarding of messages for the mobile terminal 10 to and from a messaging center. It should be noted that although the MSC 46 is shown in the system of FIG. 2, the MSC 46 is merely an exemplary network device and embodiments of the present invention are not limited to use in a network employing an MSC.

The MSC 46 can be coupled to a data network, such as a local area network (LAN), a metropolitan area network (MAN), and/or a wide area network (WAN). The MSC 46 can be directly coupled to the data network. In one typical embodiment, however, the MSC 46 is coupled to a gateway device (GTW) 48, and the GTW 48 is coupled to a WAN, such as the Internet 50. In turn, devices such as processing elements (e.g., personal computers, server computers or the like) can be coupled to the mobile terminal 10 via the Internet 50. For example, as explained below, the processing elements can include one or more processing elements associated with a computing system 52 (two shown in FIG. 2), origin server 54 (one shown in FIG. 2) or the like, as described below.

The BS 44 can also be coupled to a serving GPRS (General Packet Radio Service) support node (SGSN) 56. As known to those skilled in the art, the SGSN 56 is typically capable of performing functions similar to the MSC 46 for packet switched services. The SGSN 56, like the MSC 46, can be coupled to a data network, such as the Internet 50. The SGSN 56 can be directly coupled to the data network. In a more typical embodiment, however, the SGSN 56 is coupled to a packet-switched core network, such as a GPRS core network 58. The packet-switched core network is then coupled to another GTW 48, such as a gateway GPRS support node (GGSN) 60, and the GGSN 60 is coupled to the Internet 50. In addition to the GGSN 60, the packet-switched core network can also be coupled to a GTW 48. Also, the GGSN 60 can be coupled to a messaging center. In this regard, the GGSN 60 and the SGSN 56, like the MSC 46, may be capable of controlling the forwarding of messages, such as MMS messages. The GGSN 60 and SGSN 56 may also be capable of controlling the forwarding of messages for the mobile terminal 10 to and from the messaging center.

In addition, by coupling the SGSN 56 to the GPRS core network 58 and the GGSN 60, devices such as a computing system 52 and/or origin server 54 may be coupled to the mobile terminal 10 via the Internet 50, SGSN 56 and GGSN 60. In this regard, devices such as the computing system 52 and/or origin server 54 may communicate with the mobile terminal 10 across the SGSN 56, GPRS core network 58 and the GGSN 60. By directly or indirectly connecting mobile terminals 10 and the other devices (e.g., computing system 52, origin server 54, etc.) to the Internet 50, the mobile terminals 10 may communicate with the other devices and with one another, such as according to the Hypertext Transfer Protocol (HTTP) and/or the like, to thereby carry out various functions of the mobile terminals 10.

Although not every element of every possible mobile network is shown and described herein, it should be appreciated that the mobile terminal 10 may be coupled to one or more of any of a number of different networks through the BS 44. In this regard, the network(s) may be capable of supporting communication in accordance with any one or more of a number of first-generation (1G), second-generation (2G), 2.5G, third-generation (3G), 3.9G, fourth-generation (4G) mobile communication protocols or the like. For example, one or more of the network(s) can be capable of supporting communication in accordance with 2G wireless communication protocols IS-136 (TDMA), GSM, and IS-95 (CDMA). Also, for example, one or more of the network(s) can be capable of supporting communication in accordance with 2.5G wireless communication protocols GPRS, Enhanced Data GSM Environment (EDGE), or the like. Further, for example, one or more of the network(s) can be capable of supporting communication in accordance with 3G wireless communication protocols such as a Universal Mobile Telephone System (UMTS) network employing Wideband Code Division Multiple Access (WCDMA) radio access technology. Some narrow-band AMPS (NAMPS), as well as TACS, network(s) may also benefit from embodiments of the present invention, as should dual or higher mode mobile stations (e.g., digital/analog or TDMA/CDMA/analog phones).

The mobile terminal 10 can further be coupled to one or more wireless access points (APs) 62. The APs 62 may comprise access points configured to communicate with the mobile terminal 10 in accordance with techniques such as, for example, radio frequency (RF), infrared (IrDA) or any of a number of different wireless networking techniques, including wireless LAN (WLAN) techniques such as IEEE 802.11 (e.g., 802.11a, 802.11b, 802.11g, 802.11n, etc.), WiMAX techniques such as IEEE 802.16, and/or wireless Personal Area Network (WPAN) techniques such as IEEE 802.15, BlueTooth (BT), ultra wideband (UWB) and/or the like. The APs 62 may be coupled to the Internet 50. Like with the MSC 46, the APs 62 can be directly coupled to the Internet 50. In one embodiment, however, the APs 62 are indirectly coupled to the Internet 50 via a GTW 48. Furthermore, in one embodiment, the BS 44 may be considered as another AP 62. As will be appreciated, by directly or indirectly connecting the mobile terminals 10 and the computing system 52, the origin server 54, and/or any of a number of other devices, to the Internet 50, the mobile terminals 10 can communicate with one another, the computing system, etc., to thereby carry out various functions of the mobile terminals 10, such as to transmit data, content or the like to, and/or receive content, data or the like from, the computing system 52. As used herein, the terms "data," "content," "information" and similar terms may be used interchangeably to refer to data capable of being transmitted, received and/or stored in accordance with embodiments of the present invention. Thus, use of any such terms should not be taken to limit the spirit and scope of embodiments of the present invention.

Although not shown in FIG. 2, in addition to or in lieu of coupling the mobile terminal 10 to computing systems 52 across the Internet 50, the mobile terminal 10 and computing system 52 may be coupled to one another and communicate in accordance with, for example, RF, BT, IrDA or any of a number of different wireline or wireless communication techniques, including LAN, WLAN, WiMAX, UWB techniques and/or the like. One or more of the computing systems 52 can additionally, or alternatively, include a removable memory capable of storing content, which can thereafter be transferred to the mobile terminal 10. Further, the mobile terminal 10 can be coupled to one or more electronic devices, such as printers, digital projectors and/or other multimedia capturing, producing and/or storing devices (e.g., other terminals). Like with the computing systems 52, the mobile terminal 10 may be configured to communicate with the portable electronic devices in accordance with techniques such as, for example, RF, BT, IrDA or any of a number of different wireline or wireless communication techniques, including USB, LAN, WLAN, WiMAX, UWB techniques and/or the like.

In an exemplary embodiment, content or data may be communicated over the system of FIG. 2 between a mobile terminal, which may be similar to the mobile terminal 10 of FIG. 1, and a network device of the system of FIG. 2 in order to, for example, execute applications or establish communication between the mobile terminal 10 and other mobile terminals. As such, it should be understood that the system of FIG. 2 need not be employed for communication between mobile terminals or between a network device and the mobile terminal, but rather FIG. 2 is merely provided for purposes of example. Furthermore, it should be understood that embodiments of the present invention may be resident on a communication device such as the mobile terminal 10, and/or may be resident on a network device or other device accessible to the communication device.

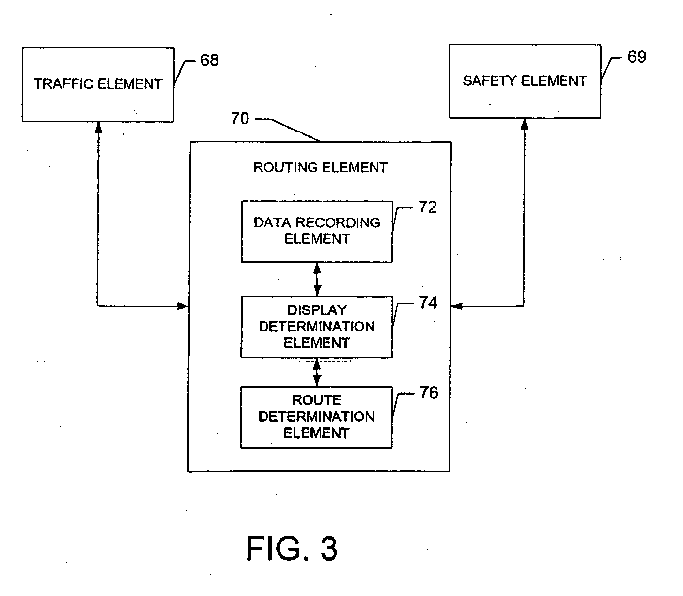

An exemplary embodiment of the invention will now be described with reference to FIG. 3, in which certain elements of a system for providing are displayed. The system of FIG. 3 may be employed, for example, on the mobile terminal 10 of FIG. 1 or one or more of the network devices of FIG. 2. However, it should be noted that the system of FIG. 3, may also be employed on a variety of other devices, both mobile and fixed, and therefore, the present invention should not be limited to application on devices such as the mobile terminal 10 of FIG. 1 or the network devices of FIG. 2.

Referring now to FIG. 3, a block diagram of a system for employing an embodiment of the present invention is displayed. As shown in FIG. 3, the system may include a traffic element 68, a safety element 69 and a routing element 70. Each of the traffic element 68, the safety element 69 and the routing element 70 may be any device or means embodied in hardware, software or a combination of hardware and software that is capable of performing the corresponding functions described below. The traffic element 68, the safety element 69 and the routing element 70 may be in communication with each other via any wired or wireless connection. In an exemplary embodiment, the routing element 70 may be embodied at the mobile terminal 10, or at a network device such as a server configured to enable communications with the mobile terminal 10. The traffic element 68 and the safety element 69 may each be embodied at a network device such as a server in the network of FIG. 2. It should be understood that, in an embodiment where the traffic element 68, the safety element 69 and the social routing element 70 are each embodied as servers, one or more of the traffic element 68, the safety element 69 and the social routing element 70 may be embodied on the same physical server. Alternatively, each of the traffic element 68, the safety element 69 and the social routing element 70 may be embodied on a separate server.

The traffic element 68 may be configured to receive information defining a particular route (or route segment) between two locations and determine traffic information related to the particular route (or route segment). As an alternative, the traffic element 68 may be configured to determine traffic information for a particular area, independent of any particular route. In either case, for example, the traffic element 68 may be configured to determine traffic information based on footfall statistics for a route and/or a region. The footfall statistics may represent traffic density along the route or in the region. In an exemplary embodiment, the footfall statistics may represent pedestrian traffic along a route or the presence of entities in a region.

The traffic information may be obtained in several ways. For example, traffic information may be obtained using magnetic sensors embedded in public spaces. The magnetic sensors may track the number of people passing by a certain point over time. Thus, traffic information may be determined at particular points along the route or at particular points in the region. Alternatively, traffic information may be obtained using satellite imaging. Thus, satellite imaging data may be utilized to determine traffic information over portions of the route or the region that are covered by satellite imaging devices. As yet another alternative example, traffic information may be determined based on high-end image processing using, for example, closed circuit television (CCTV) cameras. Again, in this example, the traffic information would be provided for those areas of the route or region for which CCTV coverage is provided. In yet another exemplary embodiment, access points and/or cellular base stations communicating with mobile terminals could be utilized to derive relatively high-resolution traffic information indicative of traffic information based on the devices carried by the individuals along the route or in the region (e.g., via information communicated from a mobile terminal's positioning sensor or via triangulation or other mechanisms). Other possibilities for determining the traffic information are also available, including combinations of the examples above and/or other mechanisms.

The traffic element 68 may be configured to communicate the traffic information to the routing element 70 for use in selection or determination of a route as described below. In an embodiment in which device based traffic information is determined (e.g., using access point and/or base station data), the traffic information may include a device identifier of each device along the route or in the region. The device identifier may be a unique identifier indicative of each corresponding device (e.g., mobile identification number (MIN), mobile directory number (MDN), etc.). The traffic information could be communicated in the form of a number indicating a density or quantity of traffic along a route or in a region, or in a form indicative of a location of individuals or groups of individuals along the route or in the region (e.g., as an entity displayed on a map view of a route or region).

The safety element 69 may be configured to communicate safety information to the social routing element 70 for use in route selection or determination as described below. In this regard, the safety element 69 may receive safety data from one or more safety data sources. Each of the safety data sources may provide safety data of any particular safety data type. A safety data type may refer to a class, category, group or set of data that shares a common trait, feature or characteristic. Examples of safety data types may include accident data, airbag deployment data, road characteristic data, vehicular crime rate data, general crime rate data, etc. The safety information may be obtained, received or accessed from one or more sources. In an exemplary embodiment, the safety information may be obtained from one or more databases that may be either periodically, routinely or continuously updated.

In an exemplary embodiment not presently claimed in independent form, the safety element 69 may be configured to determine a value indicative of a safety score on the basis of the safety information. For example, the safety element 69 may receive route information defining a route and determine, for each route (or for segments of each route) the corresponding safety score of the route (or route segment). Alternatively, a region may be assigned a safety score based on the safety information associated with the region. In this regard, an area having a high crime rate may receive a high (or low) safety score. Thus, if a route passes through the area having the high crime rate, an overall safety score for the route could be determined based on weighted accumulation of the scores of the regions through which the route passes. The weighting may be assigned based on the time and/or distance (e.g., exposure) in each corresponding area. As such, in one embodiment, rather than communicating the safety information to the routing element 70, the safety element 69 may communicate the safety score for each route (or route segment) to the routing element 70.

As shown in FIG. 3, the routing element 70 may include a data recording element 72, a display determination element 74 and a route determination element 76. One or more of the data recording element 72, the display determination element 74 and the route determination element 76 may be controlled by or embodied as a processing element such as, for example, a processor of a server or the controller 20 of FIG. 1. As such, the entirety of the routing element 70 may be embodied within the mobile terminal 10, or may alternatively be embodied within one or more network devices of FIG. 2. As yet another alternative, some components of the routing element 70 may be entirely or partially embodied at the mobile terminal 10, while other components of the routing element 70 may be entirely or partially embodied at a network device such as a navigation services server. Accordingly, embodiments of the present invention may be configured in a client/server environment where a client terminal (e.g., the mobile terminal 10) communicates with a server terminal (e.g., a network device) to receive route guidance information and/or position information.

The data recording element 72 may be any means or device (e.g., a memory device) configured to receive and store one or more of route information, traffic information, safety information, etc. The data recording element 72 may also or alternatively store historical device identity information. In this regard, the historical device identity information may include a list of device identifiers which have come into proximity of the user's device. In an exemplary embodiment, the data recording element 72 may be configured to store a device identifier of each device that comes within a predefined distance of the user's device. In other words, the data recording element 72 may enable the user's device to remember devices which have been proximate to the user's device in the past. Bluetooth, Wibree, or other short range communication mechanisms may be used to determine or recognize other devices. Accordingly, when a device comes in range of the user's device so that Bluetooth, Wibree, etc., communications can be established, the identity of the in range device may be recorded in the data recording element 72. However, a threshold distance may also or alternatively be defined around the user, such that a device identifier of any device noted to penetrate the threshold distance via GPS or other positioning mechanisms may be logged or otherwise recorded in the historical device identity information.

The data recording element 72 may also store social information in association with each of the device identifiers. In this regard, the social information may include a list of device identifiers indicative of devices which have been encountered during previous traversals of a route and/or devices of friends of the user and a corresponding classification. In an exemplary embodiment, the data recording element 72 may also be configured to store one or more routes, or one or more segments of one or more routes. The data recording element 72 may be further configured to store safety information and/or social information in association with a respective route and/or route segment. Thus, for example, the data recording element 72 may store identity information, not only about previously encountered devices and/or devices of friends, but the data recording element 72 may also be configured to store the identity information in association with a particular route. The route(s) and/or route segment(s) may be defined by a collection of location data provided, for example, by the positioning sensor 36.

The social information may be determined using traffic information provided by the traffic element 68 with respect to each device along the route. For example, as indicated above, devices along the route, which may be defined to be devices that are within a predetermined distance of the route, may be classified based on their relationship to the user. One example of classifying devices may include categorizing each device into one of three categories such as unknown devices, familiar strangers, and friends. Friends may be determined based on call frequency, address books, etc. or may be otherwise defined by a user. Familiar strangers may include devices that have previously been proximate to the user's device, either on the current route or any other route during which the data recording element 72 was in operation. Unknown devices may include devices that have not previously been recorded as being proximate to the user's device.

During operation, the data recording element 72 may be in communication with the positioning sensor 36 (or with a positioning module of a server) in order to store route data. In an exemplary embodiment, the data recording element 72 may store location data associated with a route including time, date and/or day of the week information which may be stored in association with other non-operational information such as safety information, traffic information and/or social information. Accordingly, route data associated with a route, which may be stored in the data recording element 72, may include a collection of data defining a route and/or route segment (e.g., starting point, destination, waypoints between starting point and destination) and the route data may be stored in association with operational parameter(s), non-operational parameter(s) and/or time, date and/or day-of-week during which the operational or non-operational parameter(s) were measured or otherwise gathered.

The route data may be stored by route or by route segment. In this regard, a route may be defined by at least a particular starting point and a particular destination, and may be further defined by a path taken in transit therebetween. Meanwhile, a route segment may be any portion of a route, and may be defined by two or more locations along the route, where the locations may include a starting point, destination and/or waypoints therebetween. For example, a route segment could be a portion of the route between the starting point and a waypoint, between two waypoints, or between a waypoint and the destination.

The route determination element 76 may be embodied as any device or means embodied in either hardware, software, or a combination of hardware and software that is configured to determine a candidate route (or route segment) between two locations. In this regard, for example, the route determination element 76 may be configured to determine one or more candidate routes based on any known route determination methods except as further modified below. In this regard, the route determination element 76 may include an application or algorithm for determining possible routes such as, for example, Mapquest or other known route determination applications. Accordingly, the route determination element 76 may be configured to determine candidate routes using operational information such as driving time, driving distance, fuel consumption, battery consumption, etc. like a typical route determination element 76. However, the route determination element 76 of embodiments of the present invention may further be configured to determine candidate routes on the basis of non-operational information such as the social information, the traffic information and/or the safety information.

In examples not presently claimed in independent form, a candidate route may be determined based on operational information and the candidate route may be communicated to the display determination element 74 along with non-operational information for selection of a route. However, in an alternative exemplary embodiment, a candidate route may be determined based on the non-operational information. For example, rather than generating a candidate route and matching the candidate route to information related to devices or individuals proximate to the route, the route determination element 76 may be configured to determine the candidate route in order to increase (or decrease) (e.g., maximize or minimize) the number of devices or individuals proximate to the route. The determination of candidate routes based on non-operational information may be performed based on user preference. Additionally or alternatively in examples not presently claimed in independent forms, the determination of candidate routes may be made based on safety information. For example, if user preference indicates a preference for a safe route, the route determination element 76 may generate a candidate route in consideration of safety information.

The route determination element 76 may be configured to communicate candidate route information (e.g., information defining each of one or more candidate routes) to the display determination element 74 for use in providing information for user selection of a route on the basis of non-operational information (e.g. social information, safety information, traffic information, etc.) or for automatic selection of a route on the basis of user defined preferences related to non-operational information.

The display determination element 74 may be embodied as any device or means embodied in either hardware, software, or a combination of hardware and software that is configured to drive a visual display of route data in association with corresponding non-operational information for a candidate route. In this regard, the display determination element 74 may receive non-operational information such as traffic information, safety information and/or social information associated with corresponding ones of one or more candidate routes and may provide a mechanism for route selection on the basis of the non-operational information. After route selection, whether such route selection is made by user selection or based on user preferences, the display determination element 74 may drive the display of the selected route (e.g., via the display 28).

In an exemplary embodiment the display determination element 76 may receive route data defining each candidate route and corresponding non-operational information corresponding to each candidate route. One or more candidate routes may then be presented to the user in a format that enables the user to recognize each route and the corresponding non-operational information associated with each route. For example, the display determination element 76 may be configured to display information on candidate routes in a list format by providing an identification of a route (e.g., route 1, subway route, bus route, etc.) and corresponding non-operational information (e.g., social information such as 7 unknown devices, 14 familiar strangers, 2 friends). Alternatively, each of unknown devices, familiar strangers and friends may be assigned a corresponding weight and an overall social score may be assigned to the route based on the accumulation of the aggregate weights for a candidate route. The social score may then be presented to the user in connection with the identification of the route. Operational information such as, for example, a corresponding length of the route may optionally also be displayed. The user may utilize a user interface (e.g., a keyboard, mouse, etc.) to select a desired one of the candidate routes.

Based on the information above, it should be apparent that the user may select a route based on a preference for a busy route, or a route that is not busy. Thus, for example, the user could select the busy route if the user feels safe with many other individuals surrounding them on their journey, or if the user prefers a quiet route, the user could select the route that is not busy. Alternatively, the user could select a route based on the number of "regulars" who are currently near the route. Thus, the user may be comforted by the routine of seeing familiar faces along the route, although they may be strangers. However, if the user had a bad day, the user may avoid the regular crowd. Utilizing traffic and/or social information, the user may be able to determine that the bus stop or train station is either empty or full and select their route accordingly. As yet another alternative, the user could select a route based on a preference for a low likelihood of meeting a friend, or a high likelihood of meeting a friend along the route.

By reviewing the non-operational information corresponding to each candidate route, the user may manually select one of the candidate routes and receive route guidance with respect to the route. As stated above, the candidate routes may be presented in a list format. However, in an alternative embodiment, the candidate routes may be presented one at a time, for example, in an order determined based on user preferences, although any ordering including random is possible.

As an alternative to manual route selection, the user may establish user preferences for automatic route selection. In this regard, the user may utilize a user interface to select preferences which may differentiate between moods of the user and select a route accordingly. For example, if the user is feeling unsociable, a corresponding selection may be made so that the display determination element 74 may automatically select routes having lower social scores or fewer friends and/or familiar strangers. Alternatively, if the user is feeling sociable, a corresponding preference may be selected so that the display determination element 74 may automatically select a route having a higher social score or more friends and/or familiar strangers. The user preferences may also impact candidate route determination as described above, since a user preference for sociability may, for example, cause the route determination element 76 to generate a route through an area with a larger number of friends and/or familiar strangers.

In embodiments not presently claimed in independent form, rather than receiving safety scores from the safety element 69, the display determination element 76 may also be configured to determine the safety score for each route or route segment based on route data received from the route determination element 76 and safety information received from the safety element 69. Whether the display determination element 76 receives safety scores from the safety element 69 or calculates safety scores from safety information received from the safety element 69, the display determination element 76 may be configured to display route data for a candidate route in association with or based on the safety information. In this regard, similar to the description above with respect to candidate route display based on social and/or traffic information, a user may manually select a route based on safety information associated with the route, or the route may be automatically selected based on user preferences related to safety information.

In another embodiment not presently claimed in independent form, the display determination element 76 may be configured to drive the display to indicate indicia of the safety information. For example, an alert may be provided if the user enters an area having a safety score at (or above or below) a particular threshold value. As an alternative, the display may be color coded to indicate degrees of relative safety for a particular portion of an area.

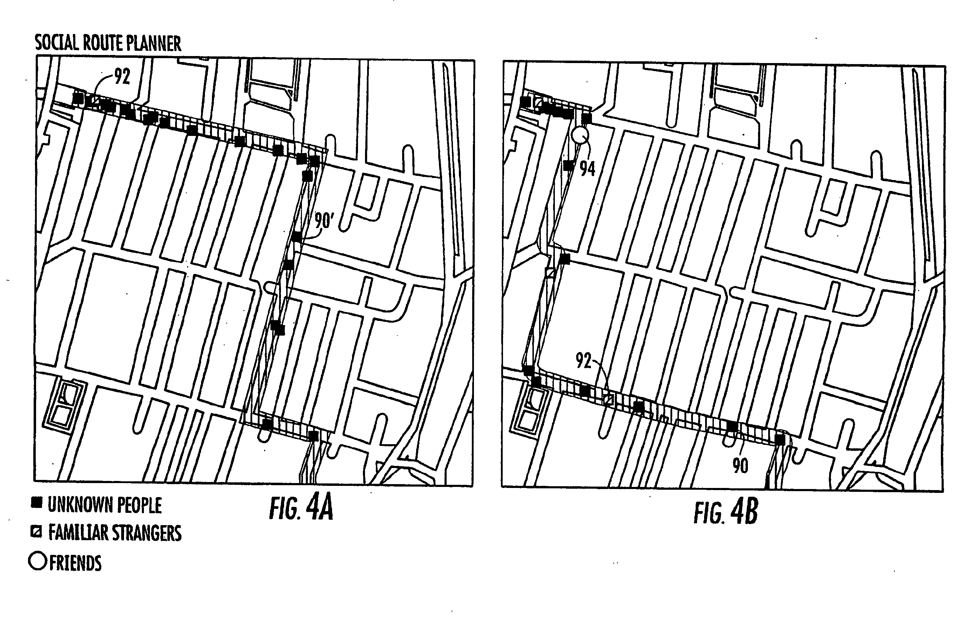

In an exemplary embodiment, the display determination element 74 may be configured to drive a display of route data using a mapping application such as, for example, Mapquest, with non-operational data superimposed over the route data. In this regard, for example, FIG. 4 illustrates an example of two candidate routes displayed with corresponding social information superimposed on the respective routes. As can be seen from FIG. 4, FIG. 4A illustrates a first route (or route segment) and FIG. 4B illustrates a second route (or route segment), which is an alternative to the first route, in a map view. In both FIGS. 4A and 4B, rather than, for example, displaying a social score in association with each route, the display determination element 74 may be configured to drive the display of indicia of social entities along each of the first and second routes, respectively, on a map view. As indicated in FIGS. 4A and 4B, unknown people 90 may have a first type of social entity indicia (e.g., black boxes), while familiar strangers 92 (e.g., gray boxes) and friends 94 (e.g., filled in circles) are each indicated by corresponding different types of social entity indicia. In an exemplary embodiment, the device identifier may not be available to the user. Rather, the user may be enabled to view only the social entity indicia.

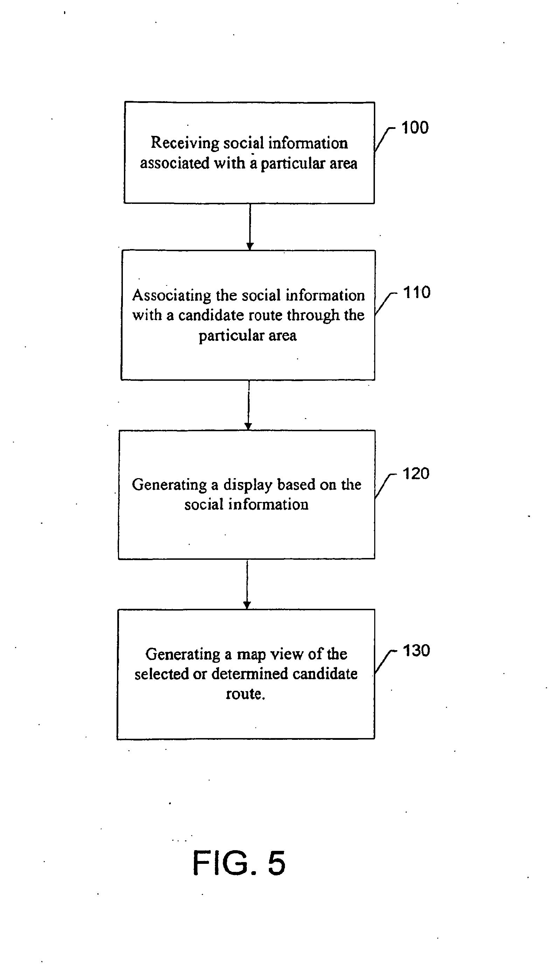

FIG. 5 is a flowchart of a system, method and program product according to exemplary embodiments of the invention. It will be understood that each block or step of the flowcharts, and combinations of blocks in the flowcharts, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory device of the mobile terminal or server and executed by a built-in processor in the mobile terminal or server. As will be appreciated, any such computer program instructions may be loaded onto a computer or other programmable apparatus (i.e., hardware) to produce a machine, such that the instructions which execute on the computer or other programmable apparatus create means for implementing the functions specified in the flowcharts block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowcharts block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowcharts block(s) or step(s).

Accordingly, blocks or steps of the flowcharts support combinations of means for performing the specified functions, combinations of steps for performing the specified functions and program instruction means for performing the specified functions. It will also be understood that one or more blocks or steps of the flowcharts, and combinations of blocks or steps in the flowcharts, can be implemented by special purpose hardware-based computer systems which perform the specified functions or steps, or combinations of special purpose hardware and computer instructions.

In this regard, one embodiment of a method for providing a social route planner includes receiving social information associated with a particular area at operation 100. In an optional operation 110, the method may further include associating the social information with a candidate route through the particular area. Such association may include selecting or determining one of a plurality of candidate routes. The selection of operation 110 may occur either in response to receipt of a selection from a user or automatically based on user preferences. At operation 120, a display may be generated based on the social information. A map view of the selected or generated candidate route may be displayed at optional operation 130.

In an exemplary embodiment, operation 120 may include generating a list of candidate routes with corresponding social information for each of the candidate routes. As an alternative, operation 120 may include generating a map view of one of the candidate routes including social entity indicia indicative of devices along the one of the candidate routes. The determination of a candidate route through the particular area may be made based on the social information. Additionally, the social information received may include data indicative of devices currently located in the particular area. Each such device may be classified based on a relationship between a user of each corresponding device and a user of a device generating the display.

In an embodiment not presently claimed in independent form, the method may further include an operation of receiving safety information associated with the particular area. In such an embodiment, generating the display may include generating indicia of the safety information is association with a candidate route such as color coding on the display or an alarm or other visual, mechanical or audible alert.

The above described functions may be carried out in many ways. For example, any suitable means for carrying out each of the functions described above may be employed to carry out the invention. In one embodiment, all or a portion of the elements of the invention generally operate under control of a computer program product. The computer program product for performing the methods of embodiments of the invention includes a computer-readable storage medium, such as the non-volatile storage medium, and computer-readable program code portions, such as a series of computer instructions, embodied in the computer-readable storage medium.

## Claims

1. A method for route planning comprising:
storing social information, the social information comprising at least a classification of each of a plurality of devices (10) based on a relationship between a user of each of the plurality of devices (10) and a user of a device (10) generating a display;
generating candidate routes through a particular area based on at least the social information;
associating the social information with at least one candidate route through the particular area; and
generating a display based on the at least one candidate route and its associated social information.

2. The method according to claim 1, wherein generating the display based on the at least one candidate route associated with the social information comprises generating and displaying a list of candidate routes with corresponding social information for each of the candidate routes.

3. The method according to any of claims 1-2, wherein generating the display based on the at least one candidate route associated with the social information comprises generating and displaying a map view of one of the candidate routes including social entity indicia indicative of devices (10) along the one of the candidate routes.

4. The method according to any of claims 1-3, further comprising receiving a selection of one of a plurality of candidate routes and displaying a map view of the selected candidate route.

5. The method according to any of claims 1-3, further comprising automatically selecting one of a plurality of candidate routes based on a user preference and displaying a map view of the selected candidate route.

6. The method according to any of claims 1-5, further comprising receiving safety information associated with the particular area.

7. The method according to claim 6, wherein generating the display comprises generating indicia of the safety information in association with a candidate route.

8. The method according to any of claims 1-7, wherein social information classifications are generated based at least in part upon a history of devices (10) that have been proximate to the apparatus within a threshold distance.

9. A computer program product comprising one or more sequences of one or more instructions which, when executed by a processor (20), cause an apparatus (10) to perform a method according to any of claims 1-8.

10. An apparatus (10) for route planning comprising:
means (72) for storing social information, the social information comprising at least a classification of each of a plurality of devices (10) based on a relationship between a user of each of the plurality of devices (10) and a user of the apparatus;
means (20) for generating candidate routes through a particular area based on at least the social information;
means for associating the social information with at least one candidate route through the particular area; and
means for generating a display (28) based on the at least one candidate route and its associated social information.

11. The apparatus (10) according to claim 10, further comprising means for performing a method according to any of claims 2-8.

12. The apparatus (10) according to claim 10 or claim 11, further comprising at least a processor (20) and a memory (40, 42) that are utilized to implement the means.

13. The apparatus (10) according to any of claims 10-12, wherein the apparatus (10) is a mobile device.

## Patentansprüche

1. Verfahren für die Routenplanung, das Folgendes umfasst:
Speichern von sozialen Informationen, wobei die sozialen Informationen zumindest eine Einordnung jeder von mehreren Vorrichtungen (10) aufgrund einer Beziehung zwischen einem Anwender einer jeden der mehreren Vorrichtungen (10) und einem Anwender einer Vorrichtung (10), die eine Anzeige erzeugt, umfassen;
Erzeugen von Kandidatenrouten durch einen besonderen Bereich zumindest aufgrund der sozialen Informationen;
Zuordnen der sozialen Informationen zu mindestens einer Kandidatenroute durch den besonderen Bereich; und
Erzeugen einer Anzeige aufgrund der mindestens einen Kandidatenroute und ihrer zugehörigen sozialen Informationen.

2. Verfahren nach Anspruch 1, wobei das Erzeugen der Anzeige aufgrund der mindestens einen den sozialen Informationen zugeordneten Kandidatenroute umfasst, eine Liste von Kandidatenrouten mit entsprechenden sozialen Informationen für jede der Kandidatenrouten zu erzeugen und anzuzeigen.

3. Verfahren nach einem der Ansprüche 1-2, wobei das Erzeugen der Anzeige aufgrund der mindestens einen den sozialen Informationen zugeordneten Kandidatenroute umfasst, eine Kartensicht von einer der Kandidatenrouten, die Angaben einer sozialen Entität enthält, die die Vorrichtungen (10) entlang der einen der Kandidatenrouten angeben, zu erzeugen und anzuzeigen.

4. Verfahren nach einem der Ansprüche 1-3, das ferner umfasst, eine Auswahl von einer von mehreren Kandidatenrouten zu empfangen und eine Kartensicht der ausgewählten Kandidatenroute anzuzeigen.

5. Verfahren nach einem der Ansprüche 1-3, das ferner umfasst, eine von mehreren Kandidatenrouten aufgrund einer Anwenderpräferenz automatisch auszuwählen und eine Kartensicht der ausgewählten Kandidatenroute anzuzeigen.

6. Verfahren nach einem der Ansprüche 1-5, das ferner umfasst, Sicherheitsinformationen, die dem besonderen Bereich zugeordnet sind, zu empfangen.

7. Verfahren nach Anspruch 6, wobei das Erzeugen der Anzeige umfasst, Angaben der Sicherheitsinformationen in Verbindung mit der Kandidatenroute zu erzeugen.

8. Verfahren nach einem der Ansprüche 1-7, wobei Einordnungen der sozialen Informationen zumindest teilweise aufgrund einer Vorgeschichte der Vorrichtungen (10), die innerhalb eines Schwellenabstands in der Nähe der Vorrichtung waren, erzeugt werden.

9. Computerprogrammprodukt, das eine oder mehrere Sequenzen aus einer oder mehreren Anweisungen umfasst, die, wenn sie durch einen Prozessor (20) ausgeführt werden, bewirken, dass eine Vorrichtung (10) ein Verfahren nach einem der Ansprüche 1-8 ausführt.

10. Vorrichtung (10) für die Routenplanung, die Folgendes umfasst:
Mittel (72) zum Speichern von sozialen Informationen, wobei die sozialen Informationen zumindest eine Einordnung einer jeden von mehreren Vorrichtungen (10) aufgrund einer Beziehung zwischen einem Anwender einer jeden der mehreren Vorrichtungen (10) und einem Anwender der Vorrichtung (10) umfassen;
Mittel (20) zum Erzeugen von Kandidatenrouten durch einen besonderen Bereich zumindest aufgrund der sozialen Informationen;
Mittel zum Zuordnen der sozialen Informationen zu mindestens einer Kandidatenroute durch den besonderen Bereich; und
Mittel zum Erzeugen einer Anzeige (28) aufgrund der mindestens einen Kandidatenroute und ihrer zugehörigen sozialen Informationen.

11. Vorrichtung (10) nach Anspruch 10, die ferner Mittel zur Ausführung eines Verfahrens nach einem der Ansprüche 2-8 umfasst.

12. Vorrichtung (10) nach Anspruch 10 oder Anspruch 11, die ferner mindestens einen Prozessor (20) und einen Speicher (40, 42) umfasst, die verwendet werden, um die Mittel umzusetzen.

13. Vorrichtung (10) nach einem der Ansprüche 10-12, wobei die Vorrichtung (10) eine mobile Vorrichtung ist.

## Revendications

1. Procédé permettant une planification de route comprenant les étapes suivantes :
stocker des informations sociales, les informations sociales comportant au moins une classification de chacun d'une pluralité de dispositifs (10) sur la base d'une relation entre un utilisateur de chacun de la pluralité de dispositifs (10) et un utilisateur d'un dispositif (10) générant un affichage ;
générer des routes candidates par l'intermédiaire d'une zone particulière sur la base d'au moins les informations sociales ;
associer les informations sociales avec au moins une route candidate par l'intermédiaire de la zone particulière ; et
générer un affichage sur la base de ladite route candidate et de ses informations sociales.

2. Procédé selon la revendication 1, dans lequel l'étape consistant à générer l'affichage en fonction de ladite route candidate associée aux informations sociales comprend générer et afficher une liste de routes candidates comportant des informations sociales correspondantes pour chacune des routes candidates.

3. Procédé selon l'une quelconque des revendications 1-2, dans lequel l'étape consistant à générer l'affichage en fonction de ladite route candidate associée aux informations sociales comprend générer et afficher une vue cartographique de l'une des routes candidates comportant des indices d'entités sociales indiquant des dispositifs (10) le long de ladite route candidate.

4. Procédé selon l'une quelconque des revendications 1-3, comprenant en outre les étapes consistant à recevoir une sélection de l'une d'une pluralité de routes candidates et à afficher une vue cartographique de la route candidate sélectionnée.

5. Procédé selon l'une quelconque des revendications 1-3, comprenant en outre l'étape consistant à sélectionner automatiquement l'une d'une pluralité de routes candidates en fonction d'une préférence utilisateur et à afficher une vue cartographique de la route candidate sélectionnée.

6. Procédé selon l'une quelconque des revendications 1-5, comprenant en outre l'étape consistant à recevoir des informations de sécurité associées à la zone particulière.

7. Procédé selon la revendication 6, dans lequel l'étape consistant à générer l'affichage comprend générer des indices des informations de sécurité en association avec une route candidate.

8. Procédé selon l'une quelconque des revendications 1-7, dans lequel des classifications d'informations sociales sont générées en fonction d'au moins en partie un historique des dispositifs (10) qui ont été proches de l'appareil à l'intérieur d'une distance de seuil.

9. Produit programme d'ordinateur comprenant une ou plusieurs séquences d'une ou plusieurs instructions qui, lorsqu'elles sont exécutées par un processeur (20), amènent un appareil (10) à exécuter un procédé selon l'une quelconque des revendications 1-8.

10. Appareil (10) permettant une planification de route comprenant :
des moyens (72) destinés à stocker des informations sociales, les informations sociales comportant au moins une classification de chacun d'une pluralité de dispositifs (10) en fonction d'une relation entre un utilisateur de chacun de la pluralité de dispositifs (10) et un utilisateur de l'appareil ;
des moyens (20) destinés à générer des routes candidates par l'intermédiaire d'une zone particulière en fonction d'au moins les informations sociales ;
des moyens destinés à associer les informations sociales à au moins une route candidate par l'intermédiaire de la zone particulière ; et
des moyens destinés à générer un affichage (28) en fonction de ladite route candidate et de ses informations sociales associées.

11. Appareil (10) selon la revendication 10, comprenant en outre des moyens pour exécuter un procédé selon l'une quelconque des revendications 2-8.

12. Appareil (10) selon la revendication 10 ou la revendication 11, comprenant en outre au moins un processeur (20) et une mémoire (40, 42) qui sont utilisés pour mettre en oeuvre les moyens.

13. Appareil (10) selon l'une quelconque des revendications 10-12, dans lequel l'appareil (10) est un dispositif mobile.
